# Europäisches Patentamt

## European Patent Office

## Office européen des brevets

(19)

(11) Veröffentlichungsnummer: **0 317 618**
**B1**

(12) **EUROPÄISCHE PATENTSCHRIFT**

(45) Veröffentlichungstag der Patentschrift: **23.01.91**

(51) Int. Cl.⁵: **F 03 D 3/06**

(21) Anmeldenummer: **88905751.9**

(22) Anmeldetag: **09.06.88**

(86) Internationale Anmeldenummer:
**PCT/EP88/00507**

(87) Internationale Veröffentlichungsnummer:
**WO 88/09873 15.12.88 Gazette 88/27**

(54) **WINDKRAFTMASCHINE.**

(30) Priorität: **10.06.87 DE 8708163 u**

(43) Veröffentlichungstag der Anmeldung:
**31.05.89 Patentblatt 89/22**

(45) Bekanntmachung des Hinweises auf die
Patenterteilung:
**23.01.91 Patentblatt 91/04**

(84) Benannte Vertragsstaaten:
**AT BE CH DE FR GB IT LI LU NL SE**

(56) Entgegenhaltungen:
**FR-A-2 530 296**
**NL-A-7 809 790**
**US-A-4 350 900**

(73) Patentinhaber: **WILHELM, Alfred**
**Artilleriestrasse 36 c**
**D-5000 Köln 90 (DE)**

(72) Erfinder: **WILHELM, Alfred**
**Artilleriestrasse 36 c**
**D-5000 Köln 90 (DE)**

(74) Vertreter: **Freischem, Werner, Dipl.-Ing.**
**Patentanwälte Dipl.-Ing. W. Freischem Dipl.-Ing.**
**I. Freischem An Gross St. Martin 2**
**D-5000 Köln 1 (DE)**

Courier Press, Leamington Spa, England.

EP 0 317 618 B1

## Beschreibung

Die Erfindung geht aus von einer Windkraftmaschine mit einem um eine vertikale Achse drehbaren Rotor mit mindestens drei im wesentlichen radial verlaufenden Rotorblättern, die den Rotor in gleich große Sektoren unterteilen, Windkraftmaschinen dieser Art sind bekannt aus dem deutschen Gebrauchsmuster 86 31 273 und 86 00 597. Bei diesen bekannten Windkraftmaschinen ist der Rotor mit drei oder mehr im wesentlichen radial stehenden Rotorblättern versehen, die in ihrem radial äußeren Kantenbereich etwa um 45° entgegen der Drehrichtung des Rotors abgewinkelt sind. Bei den bekannten Windkraftmaschinen ist die dem Wind entgegentretende Seite des Rotors durch eine Vorrichtung abgedeckt, die um die Achse des Rotors drehbar ist und von einer Windfahne in den Windgedreht wird.

Aus Fig. 7 der US—4 350 900 ist eine Windkraftmaschine bekannt mit einem innerhalb eines Gehäuses um eine vertikale Achse drehbaren Rotor, dessen Rotorblätter in drei Teilblätter vertikal unterteilt sind und zwischen benachbarten Teilblättern vertikale Spalte zum Durchtritt von Luft angeordnet sind. Die Teilblätter sind im Querschnitt tragflügelförmig und die konvexgewölbte Fläche dieser Teilblätter ist in Drehrichtung des Rotors bzw. auf der Windschattenseite angeordnet. Die stumpfen Kanten der Teilblätter sind die radial äußeren Kanten. Diese Windkraftmaschine ist wegen der profilierten Rotor-Teilblätter und des Rotorgehäuses relativ aufwendig.

Der vorliegenden Erfindung liegt die Aufgabe zugrunde, eine gehäuselose Windkraftmaschine der eingangs genannten Art so zu vereinfachen, daß sie kostengünstig herstellbar ist und eine den gegen den Wind drehende Teil des Rotors abdeckende Vorrichtung nicht erforderlich ist.

Diese Aufgabe wird erfindungsgemäß dadurch gelöst, daß die Rotorblätter in zwei oder mehr Teilblätter vertikal unterteilt sind und zwischen benachbarten Teilblättern vertikale Spalte zum Durchtritt von Luft angeordnet sind und die radial äußeren Randbereiche der Teilblätter gegenüber dem übrigen, mehr radialen Verlauf der Teilblätter entgegen der Drehrichtung des Rotors abgebogen oder abgeknickt sind.

Der erfindungsgemäße Rotor hat den Vorteil, daß die Rotorblätter in dem gegen den Wind drehenden Bereich einen geringeren Widerstand leisten als die Rotorblätter der bekannten Windkraftmaschine.

Die Teilblätter sind in ihren Randbereichen entgegen der Drehrichtung des Rotors um ca. 50° abgeknickt, so daß sie einen schalenförmigen oder trogförmigen Querschnitt aufweisen.

Es hat sich gezeigt, daß der Wirkungsgrad dieser Windkraftmaschine dadurch verbessert werden kann, daß die Teilblätter mit ihrem im wesentlichen ebenen Bereich nicht radial stehen, sondern um eine senkrechte Achse so gedreht sind, daß sie mit ihren radial inneren Kanten in Drehrichtung des Rotors vor dem zugehörigen Radius und die radialäußeren Randbereiche hinter diesem zugehörigen Radius liegen.

Weitere Merkmale der Erfindung ergeben sich aus den Patentansprüchen.

In der folgenden Beschreibung wird ein Ausführungsbeispiel der erfindungsgemäßen Windkraftmaschine unter Bezugnahme auf die Zeichnungen näher erläutert. Die Zeichnungen zeigen in

Fig. 1 eine perspektivische Ansicht einer zweistufigen Windkraftmaschine gemäß der Erfindung,

Fig. 2 eine Schnittansicht eines Rotors der Windkraftmaschine nach Fig. 1,

Fig. 3 eine Schnittansicht entsprechend Fig. 2 mit angedeutetem Windströmungsverlauf,

Fig. 4 eine Draufsicht auf ein Teilblatt.

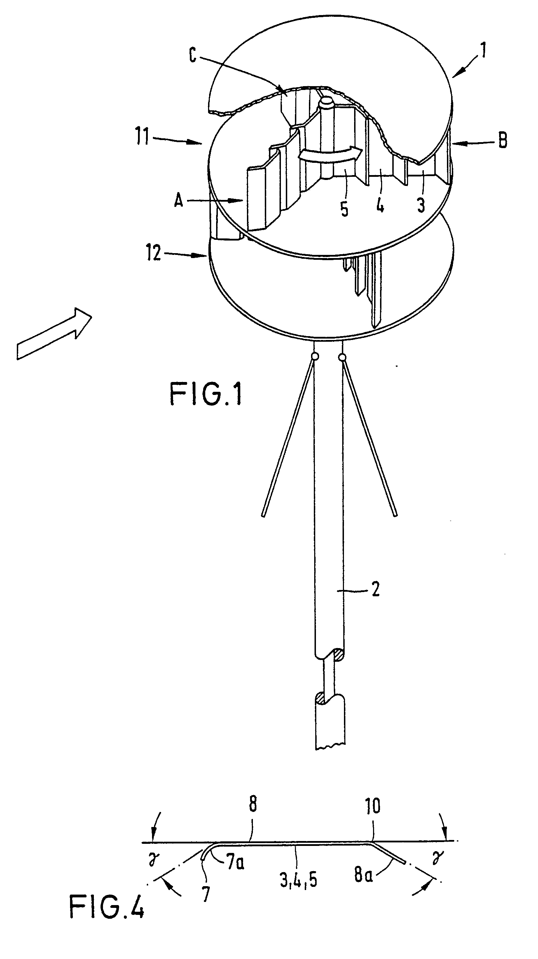

Die aus Fig. 1 ersichtliche Windkraftmaschine weist einen Rotor 1 auf, der um eine vertikale Achse drehbar in einer Halterung bzw. einem Gestell 2 gelagert ist. Der Rotor 1 weist eine obere Stufe 11 und eine untere Stufe 12 auf. In jeder Rotorstufe 11, 12 sind drei Rotorblätter A, B und C angeordnet. Die Rotorblätter A, B und C unterteilen jede Rotorstufe 11 und 12 in drei gleich große Sektoren. Die Rotorblätter A, B und C der oberen Stufe 11 sind gegenüber den Rotorblättern A, B und C der unteren Stufe 12 um die Hälfte eines Sektors versetzt.

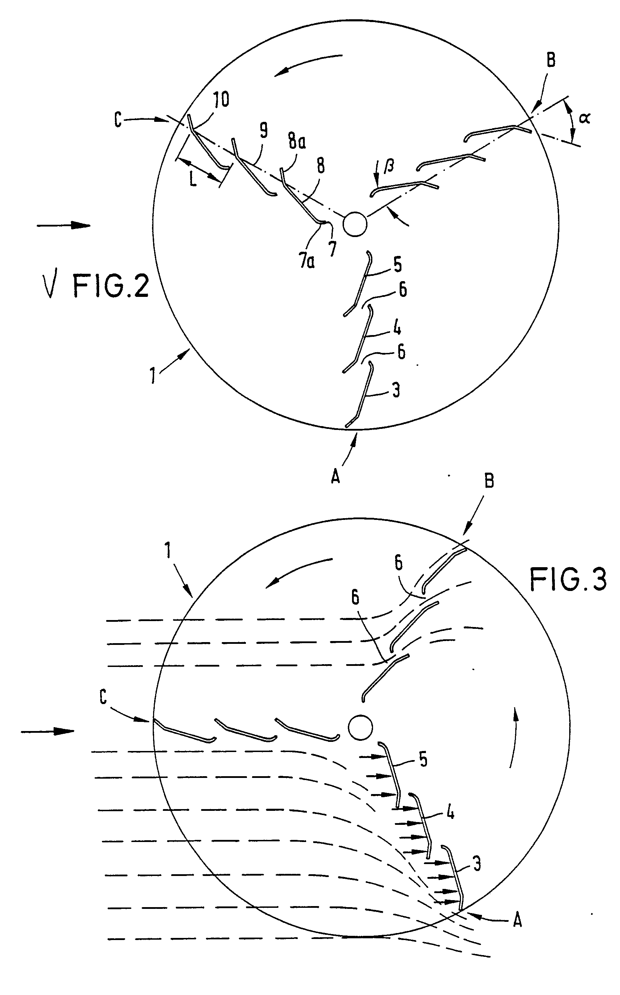

Jedes Rotorblatt A, B und C ist in drei Teilblätter 3, 4, 5 vertikal unterteilt. Wie die Fig. 2 zeigt, befinden sich zwischen benachbarten Teilblättern 3 und 4 bzw. 4 und 5 vertikale Schlitze 6, durch welche Luft hindurchtreten kann. Die Teilblätter 3, 4 und 5 stehen mit ihren im wesentlichen ebenen Bereichen 8 nicht radial, sondern sind um eine vertikale Achse um einen Winkel β von ca. 20° in Drehrichtung nach vorne verdreht angebracht.

Wie insbesondere die Fig. 4 zeigt, sind die Kantenbereiche 7a und 8a der Teilblätter 3, 4 und 5 um einen Winkel γ von ca. 30° entgegen der Drehrichtung abgewinkelt oder abgerundet, so daß die Teilblätter in Draufsicht eine schalenförmige oder trogförmige Gestalt haben. Durch diese Form und Anordnung der Teilblätter 3, 4 und 5 entsteht—wie die Fig. 3 zeigt—eine eigene, nach außen wirkende Windströmung, die am Rotorblatt B in Fig. 3 ersichtlich ist. Dadurch wird erreicht, daß in den gegen den Wind drehenden Bereich des Rotors 1, der auf Wind anfangs nach außen über ein Luftpolster an der Vorrichtung vorbeigelenkt wird und dann vorn ab etwa 45° entsprechend der Stellung des Rotorblattes C in Fig. 2 auf die andere Seite (Aktivseite) des Rotors 1 gelenkt wird. Dadurch wird etwa 2/3 der auf die Vorrichtung wirkenden Windenergie genutzt. Besonders für die Anlaufphase und bei starker Belastung ist es wichtig, daß der "aktive" Wind durch die Spalte 6 zwischen benachbarten Teilblättern 3, 4 und 4, 5 nach innen strömt und den Rotor 1 in Drehrichtung versetzt. Bei der Stellung von etwa 30° eines Rotorblattes A gegenüber der Windrichtung kann der Wind durch die Spalte 6 des Rotorblattes A auf das Rotorblatt B strömen. Bei der Stellung von etwa 90° entsprechend Rotorblatt A in Fig. 2 bis etwa 120° entsprechend Rotorblatt A in Fig. 3 erfolgt kurzzeitig ein Windstau; anschließend fließt der Wind nach außen ab und wird dabei von den abgeknickten radial äußeren Endbereichen 8a der Teilblätter 3, 4 und 5 abgebremst. Somit kann der größte Teil der Windenergie von der Vorrichtung aufgenommen werden und der Stromerzeugung oder der mechanischen Verwendung zugeführt werden. Jedes einzelne Rotorblatt A, B, C, erfährt also für den Zeitraum einer halben Umdrehung auf der "aktiven" Seite eine Strömungs-Stau-Strömungsphase. Diese Voraussetzung ist besonders günstig für die Anlaufphase der Vorrichtung bei Belastung und bei geringen Windstärken.

Bei bekannter Savonius-Rotor arbeitet demgegenüber mit einer kurzen Stauphase bei etwa 90°.

Bei hohen Windgeschwindigkeiten, d.h. bei hoher Drehzahl des Rotors 1, bildet sich ein rotierendes Windumfeld—dadurch wird nur ein Teil der Windkraft in Drehung versetzt, wodurch ein Überdrehen des Rotors 1 vermieden wird.

Diese Windkraftmaschine ist nahezu für alle Windstärken einsetzbar und gegenüber den Propelleranlagen windrichtungsunabhängig.

Aufgrund der einfachen Bauart ist der erfindungsgemäße Rotor mit geringem Aufwand und damit kostengünstig herstellbar.

Der radial äußere Endbereich 8a jedes Teilblattes 3, 4, 5 nimmt gegenüber dem zugehörigen Radius 9 des Rotorblattes A, B, C einen Winkel α von 45 bis 60° ein.

Der Winkel β zwischen Radius und der im wesentlichen ebenen Fläche 8 der Teilblätter 3, 4, 5 kann 20 bis 30° betragen, insbesondere 25°. Die Teilblätter 3, 4, 5 sind so angeordnet, daß sich benachbarte Teilblätter 3, 4 und 4, 5 an den Spalten 6 überlappen und die Spalte 6 auf der Aktivseite des Rotors 1 in Strömungsrichtung enger werden.

Bezugszeichenliste:

| | |
|---|---|
| 1 | Rotor |
| A | Rotorblatt |
| B | Rotorblatt |
| C | Rotorblatt |
| 2 | Halterung, Gestell |
| 3 | Teilblatt |
| 4 | Teilblatt |
| 5 | Teilblatt |
| 6 | Spalt |
| 7 | innere Kante |
| 7a | innerer Kantenbereich |
| 8 | ebener Bereich eines Teilblattes |
| 8a | äußerer Kantenbereich |
| 9 | Radius |
| 10 | Knickpunkt |
| 11 | obere Rotorstufe |
| 12 | untere Rotorstufe |
| | |
| L | Abstand |

**Patentansprüche**

1. Gehäuselose Windkraftmaschine, mit einem um eine vertikale Achse drehbaren Rotor (1) mit mindestens drei im wesentlichen radial angeordneten Rotorblättern (A, B und C), die den Rotor (1) in gleich große Sektoren unterteilen, dadurch gekennzeichnet, daß die Rotorblätter (A, B, C) in mehrere Teilblätter (3, 4, 5) vertikal unterteilt sind und zwischen den Teilblättern (3, 4, 5) vertikale Spalte (6) zum Durchtritt der Luft angeordnet sind und die radial äußeren Randbereiche (8a) der Teilblätter (3, 4, 5) gegenüber dem übrigen, mehr radialen Verlauf der Teilblätter (3, 4, 5) entgegen der Drehrichtung des Rotors (1) abgebogen oder abgeknickt sind.

2. Windkraftmaschine nach Anspruch 1, dadurch gekennzeichnet, daß die Teilblätter (3, 4, 5) gleich groß sind.

3. Windkraftmaschine nach Anspruch 1 oder 2, dadurch gekennzeichnet, daß die Randbereiche (8a) um etwa 50° entgegen der Drehrichtung des Rotors (1) abgeknickt sind.

4. Windkraftmaschine nach einem der Ansprüche 1 bis 3, dadurch gekennzeichnet, daß die Teilblätter (3, 4, 5) gegenüber dem zugehörigen Radius (9) um eine vertikale Achse in Drehrichtung des Rotors (1) so gedreht sind, daß ihre radial inneren Kanten (7) in Drehrichtung des Rotors (1) vor diesem Radius (9) und die radial äußeren Randbereiche (8a) der Teilblätter (3, 4, 5) hinter diesem Radius (9) liegen.

5. Windkraftmaschine nach Anspruch 4, dadurch gekennzeichnet, daß die Teilblätter (3, 4, 5) um ca. 20° gegenüber dem Radius (9) der zugehörigen Rotorblätter (A, B, C) gedreht sind.

6. Windkraftmaschine nach einem der Ansprüche 1 bis 5, dadurch gekennzeichnet, daß die radial inneren Endbereiche (7a) und die radial äußeren Endbereiche (8a) der Teilblätter (3, 4, 5) um 20 bis 60° abgewinkelt sind.

7. Windkraftmaschine nach einem der Ansprüche 1 bis 6, dadurch gekennzeichnet, daß der Abstand (L) zwischen den Knickpunkten (10) benachbarter Teilblätter (3, 4, 5) nahezu der Länge des ebenen Teils (9) eines Teilblattes (3, 4, 5) zuzüglich der des inneren Kantenbereichs (7a) entspricht.

8. Windkraftmaschine nach einem der Ansprüche 1 bis 7, dadurch gekennzeichnet, daß der im wesentliche ebene Bereich (8) der Teilblätter (3, 4, 5) leicht gebogen ist.

**Revendications**

1. Eolienne sans carter, dotée d'un rotor (1) mobile autour d'un axe vertical, d'au moins trois pales de rotor (A, B et C) disposées de façon essentiellement radiale et séparant le rotor (1) en trois secteurs de taille identique, caractérisée en ce que les pales de rotor (A, B, C) sont subdivisées verticalement en plusieurs ailettes (3, 4, 5), en ce que des interstices verticaux (6) permettant l'écoulement de l'air sont disposés entre lesdites ailettes (3, 4, 5) et en ce que les régions périphériques radialement externes (8a) des ailettes sont repliées ou recourbées dans le sens inverse au sens de rotation du rotor (1) par rapport au reste du profil des ailettes (3, 4, 5), qui est orienté plus radialement.

**2.** Eolienne selon la revendication 1, caractérisée en ce que les ailettes (3, 4, 5) sont de taille identique.

**3.** Eolienne selon la revendication 1 ou 2, caractérisée en ce que les régions périphériques (8a) sont repliées d'environ 50° dans le sens inverse au sens de rotation du rotor (1).

**4.** Eolienne selon l'une des revendications 1 à 3, caractérisée en ce que les ailettes (3, 4, 5) sont tournées autour d'un axe vertical dans le sens de rotation du rotor (1), par rapport au rayon correspondant (9), de manière à ce que leurs arêtes radialement internes (7) se trouvent devant ce rayon (9), dans le sens de rotation du rotor (1), tandis que les régions périphériques radialement externes (8a) des ailettes (3, 4, 5) se trouvent derrière ce rayon (9).

**5.** Eolienne selon la revendication 4, caractérisée en ce que les ailettes (3, 4, 5) sont tournées d'environ 20° par rapport au rayon (9) des pales de rotor correspondantes (A, B, C).

**6.** Eolienne selon l'une des revendications 1 à 5, caractérisée en ce que les extrémités radialement internes (7a) et les extrémités radialement externes (8a) des pales (3, 4, 5) sont repliées de 20 à 60°.

**7.** Eolienne selon l'une des revendications 1 à 6, caractérisée en ce que la distance (L) entre les points de pliage (10) d'ailettes voisines (3, 4, 5) correspond approximativement à la longueur de la partie plane (9) d'une ailette (3, 4, 5) plus la longueur de la région périphérique interne (7a).

**8.** Eolienne selon l'une des revendications 1 à 7, caractérisée en ce que la partie essentiellement plane (8) des ailettes (3, 4, 5) est légèrement cintrée.

**Claims**

**1.** A housing-less wind motor comprising a rotor (1) which is rotatable about a vertical axis, with at least three substantially radially arranged rotor blades (A, B and C) which subdivide the rotor (1) into sectors of equal size characterised in that the rotor blades (A, B, C) are subdivided vertically into a plurality of sub-blades (3, 4, 5) and vertical gaps (6) for the passage of air therethrough are arranged between the sub-blades (3, 4, 5) and the radially outward edge regions (8a) of the sub-blades (3, 4, 5) are bent or angled in opposition to the direction of rotation of the rotor (1) relative to the other, more radial configuration of the sub-blades (3, 4, 5).

**2.** A wind motor according to claim 1 characterised in that the sub-blades (3, 4, 5) are of the same size.

**3.** A wind motor according to claim 1 or claim 2 characterised in that the edge regions (8a) are angled through about 50° in opposition to the direction of rotation of the rotor (1).

**4.** A wind motor according to one of claims 1 to 3 characterised in that the sub-blades (3, 4, 5) are turned relative to the associated radius (9) about a vertical axis in the direction of rotation of the rotor (1) in such a way that their radially inward edges (7) lie in front of said radius (9) in the direction of rotation of the rotor (1) and the radially outward edge regions (8a) of the sub-blades (3, 4, 5) lie behind said radius (9).

**5.** A wind motor according to claim 4 characterised in that the sub-blades (3, 4, 5) are turned through about 20° relative to the radius (9) of the associated rotor blades (A, B, C).

**6.** A wind motor according to one of claims 1 to 5 characterised in that the radially inward end regions (7a) and the radially outward end regions (8a) of the sub-blades (3, 4, 5) are angled through 20 to 60°.

**7.** A wind motor according to one of claims 1 to 6 characterised in that the spacing (L) between the bend points (10) of adjacent sub-blades (3, 4, 5) almost corresponds to the length of the flat portion (9) of a sub-blade (3, 4, 5) plus that of the inner edge region (7a).

**8.** A wind motor according to one of claims 1 to 7 characterised in that the substantially flat region (8) of the sub-blades (3, 4, 5) is slightly bent.

EP 0 317 618 B1

FIG.1

FIG.4

V FIG.2

FIG.3